(19) Europäisches Patentamt
European Patent Office
Office européen des brevets

(11) EP 2 685 302 A1

(12) **EUROPEAN PATENT APPLICATION**

(43) Date of publication:
**15.01.2014 Bulletin 2014/03**

(51) Int Cl.:
*G02B 9/12* (2006.01)          *G02B 13/04* (2006.01)

(21) Application number: **13275069.6**

(22) Date of filing: **15.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.07.2012 KR 20120075603**

(71) Applicant: **Samsung Electro-Mechanics Co., Ltd. Gyeonggi-do (KR)**

(72) Inventor: **Kim, Tae Young
Gyeonggi-do 443-743 (KR)**

(74) Representative: **Potter Clarkson LLP
The Belgrave Centre
Talbot Street
Nottingham
NG1 5GG (GB)**

(54) **Small-size and wide field-of-view optical system**

(57)     Disclosed herein is a small-size and wide field-of-view optical system including: a first lens (L1) having negative refractive power, having a shape in which it is concave from the vicinity of a near axis to an object side and becomes convex outwardly, and including a coating layer formed on a surface thereof toward the object side; a second lens (L2) having positive refractive power and having a shape in which a surface thereof toward the object side is concave and an upper side thereof is convex; and a third lens (L3) having positive refractive power and having a shape in which both sides thereof are convex.

【FIG. 1】

Printed by Jouve, 75001 PARIS (FR)

EP 2 685 302 A1

**Description**

CROSS REFERENCE(S) TO RELATED APPLICATIONS

This application claims the benefit under 35 U.S.C. Section 119 of Korean Patent Application Serial No. 10-2012-0075603, entitled "Small-Size and Wide Field-Of-View Optical System" filed on July 11, 2012, which is hereby incorporated by reference in its entirety into this application.

BACKGROUND OF THE INVENTION

1. Technical Field

The present invention relates to a small-size and wide field-of-view optical system, and more particularly, to a small-size and wide field-of-view optical system capable of implementing a wide field-of-view using only three lenses.

2. Description of the Related Art

Generally, as the use of a mobile communication unit such as a mobile communication terminal, a personal digital assistant (PDA), and a smart phone has increased and a service provided through a communication technology is diversified, the mobile communication unit has been mounted with various types of additional functions in addition to a basic communication function.

In addition to the portable information technology (IT) device as described above, mounting of a camera as an auxiliary unit for securing a field-of-view of a driver or a driving auxiliary unit at the time of manufacturing a vehicle has been recently increased. In this case, the camera may be divided into a front photographing camera and a rear photographing camera according to a mounting position thereof and be divided into a monitoring or viewing camera and a sensing camera according to a use object thereof.

It is preferable that an optical system configuring the camera for a vehicle has a telephoto angle of view in order to output an image by front monitoring and has a wide angle in order to output an image by rear monitoring.

In accordance with improvement of a function of the vehicle and complexation of a multimedia, monitoring and sensing of the rear of the vehicle as well as the front thereof using the camera have been performed, and in accordance with development of a display apparatus embedded in or added to the vehicle, an optical system having a high resolution has been demanded.

In order to satisfy a high resolution and a competitive price of the camera optical system, a relatively expensive glass lens should be excluded and a relatively cheap plastic lens should be used. However, according to the related art, an optical system using a glass lens has been manufactured in order to implement clear image quality in images obtained by photographing the front and the rear of the vehicle. Therefore, a cost of the optical system increases.

Further, in the case of using the plastic lens rather than the glass lens, since four or more lenses should be used in order to compensate for image quality and aberration, it is difficult to configure a small optical system.

[Related Art Document]

[Patent Document]

(Patent Document 1) Japanese Patent Laid-open Publication No. 2006-133270

SUMMARY OF THE INVENTION

An object of the present invention is to provide a small-size and wide field-of-view optical system capable of being configured using only three plastic lenses and implementing optical performance of a stable wide field-of-view using only a plastic lens.

According to an exemplary embodiment of the present invention, there is provided a small-size and wide field-of-view optical system including: a first lens having negative refractive power, having a shape in which it is concave from the vicinity of a near axis to an object side and becomes convex outwardly, and including a coating layer formed on a surface thereof toward the object side, a second lens having positive refractive power and having a shape in which a surface thereof toward the object side is concave and an upper side thereof is convex; and a third lens having positive refractive power and having a shape in which both sides thereof are convex.

The small-size and wide field-of-view optical system may further include an aperture stop installed between the second and third lenses, wherein the aperture stop blocks unnecessary light from light passing through the optical system.

The small-size and wide field-of-view optical system may satisfy the following Conditional Equation with respect to aberration correction and MTF performance:

$$[Conditional\ Equation]\ D2/R2 > 0.98$$

where D2 indicates an interval between the first and second lenses and R2 indicates a radius of curvature of an upper side of the first lens.

The coating layer may be made of an organic material having a refractive index equal or similar to that of the first lens and be made of a thermally curable or ultraviolet (UV) curable acryl based resin.

The first to third lenses may be formed as a plastic lens of which both surfaces are aspherical surfaces.

BRIEF DESCRIPTION OF THE DRAWINGS

FIG. 1 is a lens configuration diagram showing a lens arrangement of a small-size and wide field-of-view optical system according to a first exemplary embodiment of the present invention;

FIG. 2 is an MTF graph of the optical system shown in FIG. 1;

FIGS. 3A and 3B are diagrams showing astigmatism and distortion of the optical system shown in Table 1 and FIG. 1;

FIG. 4 is a lens configuration diagram showing a lens arrangement of an imaging optical system according to a second exemplary embodiment of the present invention;

FIG. 5 is an MTF graph of the optical system shown in FIG. 4; and

FIGS. 6A and 6B are diagrams showing astigmatism and distortion of the optical system shown in Table 3 and FIG. 4.

DESCRIPTION OF THE PREFERRED EMBODIMENTS

The acting effects and technical configuration with respect to the objects of a small-size and wide field-of-view optical system according to the present invention will be clearly understood by the following description in which exemplary embodiments of the present invention are described with reference to the accompanying drawings.

However, in the lens configuration diagrams according to the following exemplary embodiments, a thickness, a size, and a shape of the lens are slightly exaggerated for a detailed description of the present invention. Particularly, a shape of a spherical surface or an aspherical surface suggested in the lens configuration diagram is only an example. Therefore, the lens is not limited to the above-mentioned shape.

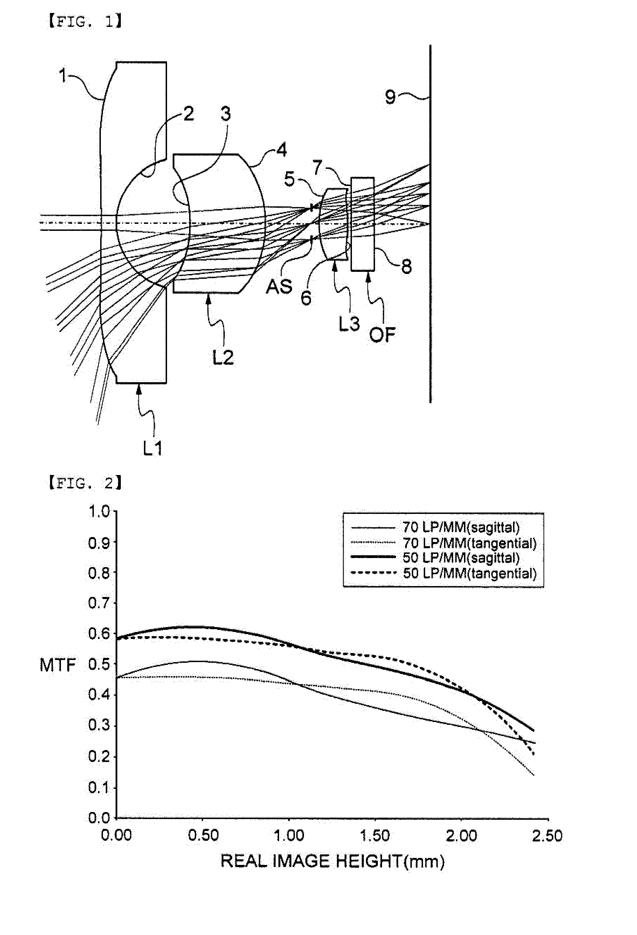

FIG. 1 is a lens configuration diagram showing a small-size and wide field-of-view optical system according to the present invention.

As shown in FIG. 1, the small-size and wide field-of-view optical system according to the present invention may be configured to include a first lens L1 having negative refractive power, a second lens L2 having a shape in which a surface thereof toward an object side is concave and an upper side thereof is convex and having positive refractive power, a third lens L3 having a shape in which both sides thereof are convex and having positive refractive power, and an aperture stop AS installed between the second and third lenses L2 and L3, wherein the first to third lenses L1 to L3 are sequentially arranged from the object side.

In addition, the small-size and wide field-of-view optical system may include an optical filter OF provided between the third lens L3 and an image surface 9, wherein the optical filter OF is configured of an infrared filter for blocking excessive infrared rays in light passing through the optical system or a cover glass coated with the infrared filter.

Here, the first lens L1 may have a shape in which it is concave from the vicinity of a near axis to the object side and becomes convex outwardly.

The aperture stop AS is positioned at the rear of the second lens L2, that is, between the second and third lenses L2 and L3, such that the small-size and wide field-of-view optical system according to the present invention may be advantageous for securing a wide field-of-view, In addition, the aperture stop AS is positioned at the front of the third lens having the positive refractive power, such that the small-size and wide field-of-view optical system according to the present invention may be advantageous for correcting spherical aberration.

In addition, the first lens L1 includes a coating layer formed on the surface thereof toward the object side and made of an organic material to have improved surface strength, such that durability thereof may be increased. That is, since a plastic lens can not but have surface strength weaker than that of a glass lens due to characteristics of a plastic material, the coating layer made of the organic material is formed on the surface of the first lens L1 that is likely to be exposed to the outside to improve the surface strength of the lens, thereby making it possible to increase the durability of the lens.

In this case, it is preferable that the first lens L1 is formed as an aspherical surface plastic lens so as to have a refractive index of 1.55 or less and the organic material forming the coating layer on the surface of the first lens L1 toward the object side is made of an acryl based resin capable of improving durability. In addition, the organic material may be one of materials that may form the coating layer simultaneously with being cured through thermal curing or ultraviolet (UV) curing, in addition to the acryl based resin.

Further, since the acryl based coating layer formed on the surface of the first lens L1 toward the object side may be formed as an anti-reflective (AR) coating layer, it is preferable that the acryl based coating layer is formed to have a small refractive index difference between the acryl based coating layer and the first lens L1. Therefore, it is preferable that the acryl based coating layer is formed to have a refractive index of about 1.55.

Meanwhile, all of the first to third lenses L1 to L3 used in the present invention are formed as the plastic lens that is easily processed so as to configure the small-size optical system and implement a wide field of view, thereby making it possible to reduce weight of the optical system, improve a working property of the optical system, and reduce a manufacturing cost.

In addition, refractive surfaces of each of the first to third lenses L1 to L3, that is, both surfaces of each of the lenses are formed as aspherical surfaces, thereby making it possible to allow various aberrations to be easily corrected and improve a degree of freedom in design.

Therefore, with the optical system according to the present invention, the first lens L1, the second lens L2, and the third lens L3 are disposed to have the negative refractive power, the positive refractive power, and the positive refractive power, respectively, and both surfaces of each of the lenses are formed as the aspherical surfaces that are easily molded, thereby making it possible to improve a resolution of the optical system and improve astigmatism and distortion characteristics, and the aperture stop AS is disposed between the second and third lenses L2 and L3 to reduce a size of the third lens L3, thereby making it possible to reduce a size of the optical system.

In the small-size optical system according to the present invention having the above-mentioned configuration, the following Conditional Equation and an acting effect thereof will be described in more detail.

$$[\text{Conditional Equation}] \quad D2/R2 > 0.98$$

Where D2 indicates an interval between the first and second lenses, and R2 indicates a radius of curvature of the upper side of the first lens.

The above Conditional Equation is a conditional equation for performance of the optical system according to the present invention, that is, aberration correction and MTF performance for improving a resolution condition.

In the above Conditional Equation, the interval between the first and second lenses L1 and L2 is adjusted to minimize a refractive index different, such that the aberration and the MTF performance are complemented to improve a resolution, thereby making it possible to secure optical performance,

In addition, each of the lenses is formed as the plastic lens made of the same material in order to satisfy a condition of the above Conditional Equation, thereby making it possible to reduce a manufacturing cost. Meanwhile, in the case of being out of a lower limit of the above Conditional Equation, a cutting phenomenon of light is generated in the vicinity of the optical system, such that loss is generated in an ambient light amount ratio. As a result, the vicinity of the optical system may become dark and a resolution may be rapidly reduced.

Hereinafter, the small-size and wide field-of-view optical system according to the present invention will be described in more detail through an example of specific numerical values.

In both of the following first and second exemplary embodiments, the small-size and wide field-of-view optical system may be configured to include the first lens L1 having the shape in which it is concave from the vicinity of the near axis to the object side and becomes convex outwardly and having the negative refractive power, the second lens L2 having the shape in which the surface thereof toward the object side is concave and the upper side thereof is convex and having the positive refractive power, the third lens L3 having the shape in which both sides thereof are convex and having the positive refractive power, and the aperture stop AS installed between the second and third lenses L2 and L3, as described above.

In addition, the small-size and wide field-of-view optical system includes the optical filter OF provided between the third lens L3 and the image surface 9, wherein the optical filter OF is configured of the infrared filter or the cover glass coated with the infrared filter

In addition, all of the first to third lenses L1 to L3 are configured of a plastic lens of which both surfaces are aspherical surfaces.

Meanwhile, an aspherical surface used in the following Exemplary embodiments is obtained from the known Equation 1, and 'E used in a Conic constant (K) and aspherical surface coefficients (A, B, C, D, E, and F) and numerals next thereto' indicate the power of 10. For example, E+02 indicates $10^2$, and E-02 indicates $10^{-2}$.

$$[Equation\ 1]$$

$$Z = \frac{cY^2}{1 + \sqrt{1 - (1+K)c^2\ Y^2}} + AY^4 + BY^6 + CY^8 + DY^{10} + EY^{12} + FY^{14} + \dots$$

Where Z indicates a distance from the top of a lens in an optical axis direction, Y indicates a distance in a direction vertical to an optical axis, c indicates a reciprocal number of a radius of curvature (r) at the top of the lens, K indicates a Conic constant, and A, B, C, D, E, and F indicate aspherical surface coefficients.

[First Exemplary Embodiment]

The following Table 1 shows examples of numerical values according to a first exemplary embodiment of the present invention.

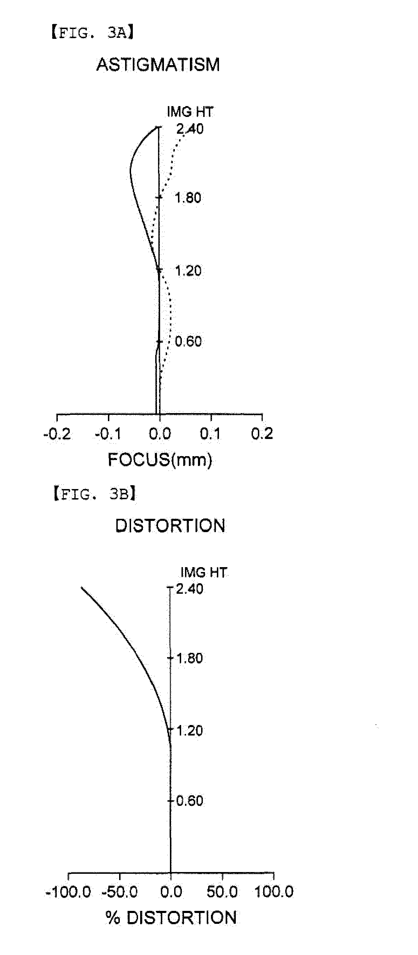

FIG. 1 is a lens configuration diagram showing a lens arrangement of a small-size and wide field-of-view optical system according to a first exemplary embodiment of the present invention; FIG. 2 is an MTF graph of the optical system shown in FIG. 1; and FIGS. 3A and 3B are diagrams showing astigmatism and distortion of the optical system shown in Table 1 and FIG. 1.

In the case of the first exemplary embodiment, the entire focal length (f) is 1.55mm, a horizontal field-of-view (HFOV) is 135 degrees, and an interval between the first and second lenses L1 and L2 is 2.91mm.

In addition, all of the first to third lenses L1 to L3 are configured of a plastic lens.

[Table 1]

| Surface No. | Radius of Curvature (R) | Thickness (T) | Refractive Index (Nd) | Remarks |
|---|---|---|---|---|
| *1 | -22.7787 | 0.6 | 1.492 | First Lens |
| *2 | 2.6682 | 2.91 | | |
| *3 | -5.1168 | 3.14 | 1.619 | Second Lens |
| *4 | -2.7352 | 1.71 | | |
| *5 | 6.8908 | 1.21 | 1.536 | Third Lens |
| *6 | -2.9718 | 1.00 | | |
| 7 | ∞ | 0.85 | 1.525 | Optical Filter |
| 8 | ∞ | 2.26 | | |

In Table 1, a mark * before the surface number indicates an aspherical surface. In the case of the first exemplary embodiment, both surfaces of the first to third lenses L1 to L3 are aspherical surfaces.

In addition, values of aspherical surface coefficients of the first exemplary embodiment by Equation 1 are represented by the following Table 2.

[Table 2]

| Surface No. | K | A | B | C | D | E |
|---|---|---|---|---|---|---|
| 1 | 5.6677 | 0.1929E-02 | -0.3492E-04 | 0.2617E-06 | 0.2031E-08 | -0.3990E-11 |
| 2 | -0.2351 | -0.4927E-02 | 0.2635E-02 | -0.5522E-03 | 0.5063E-04 | 0.2532E-06 |
| 3 | 0.4389 | -0.3695E-02 | 0.2859E-03 | -0.1175E-04 | -0.3800E-05 | 0.7087E-06 |
| 4 | -0.4744 | 0.1311E-01 | -0.1546E-02 | 0.2241E-03 | -0.1853E-04 | 0.9440E-06 |
| 5 | 9.3318 | -0.5151E-03 | 0.2971E-01 | 0.4945E-02 | -0.2644E-02 | -0.1011E-15 |

(continued)

| Surface No. | K | A | B | C | D | E |
|---|---|---|---|---|---|---|
| 6 | -0.1991 | 0.1975E-01 | 0.1748E-01 | -0.5030E-02 | 0.6558E-02 | 0.6633E-14 |

[Second Exemplary Embodiment]

The following Table 3 shows examples of numerical values according to a second exemplary embodiment of the present invention.

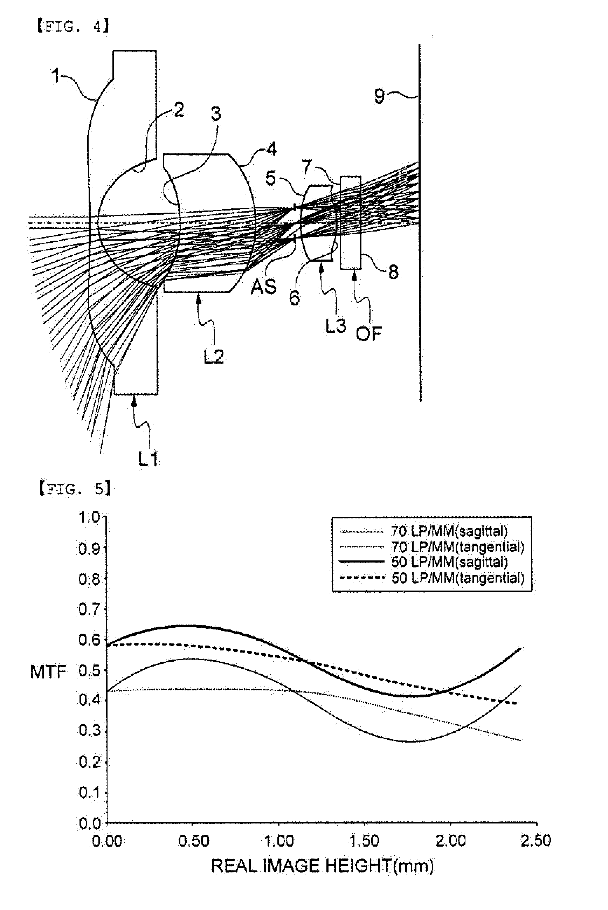

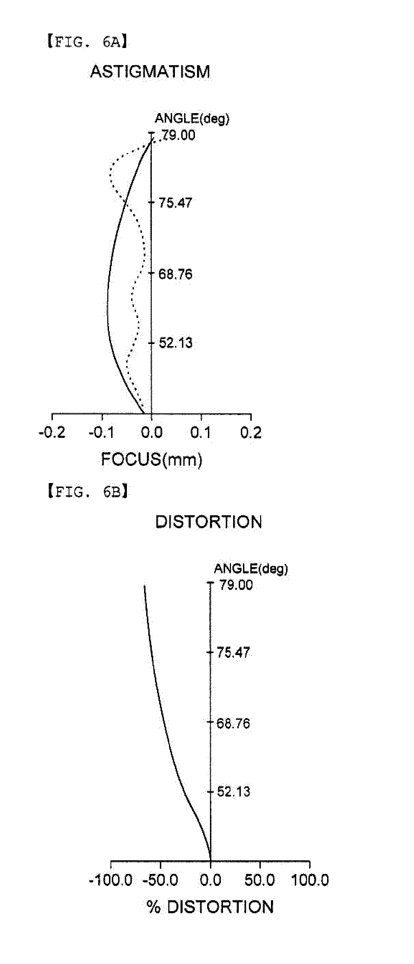

FIG. 4 is a lens configuration diagram showing a lens arrangement of an imaging optical system according to a second exemplary embodiment of the present invention; FIG. 5 is an MTF graph of the optical system shown in FIG. 4; and FIGS. 6A and 6B are diagrams showing astigmatism and distortion of the optical system shown in Table 3 and FIG. 4.

In the case of the second exemplary embodiment, the entire focal length (f) is 1.41mm, a horizontal field-of-view (HFOV) is 135 degrees, and an interval between the first and second lenses L1 and L2 is 3.27mm.

In addition, all of the first to third lenses L1 to L3 are configured of a plastic lens.

[Table 3]

| Surface No. | Radius of Curvature (R) | Thickness (T) | Refractive Index (Nd) | Remarks |
|---|---|---|---|---|
| *1 | -14.8907 | 0.50 | 1.492 | First Lens |
| *2 | 2.6697 | 3.27 | | |
| *3 | -5.5856 | 3.20 | 1.619 | Second Lens |
| *4 | -2.9641 | 1.66 | | |
| *5 | 7.0879 | 1.49 | 1.536 | Third Lens |
| *6 | -2.6385 | 0.10 | | |
| 7 | ∞ | 0.85 | 1.525 | Optical Filter |
| 8 | ∞ | 2.20 | | |

In Table 3, a mark * before the surface number indicates an aspherical surface. In the case of the second exemplary embodiment, both surfaces of the first to third lenses L1 to L3 are aspherical surfaces.

In addition, values of aspherical surface coefficients of the second exemplary embodiment by Equation 1 are represented by the following Table 4.

[Table 4]

| Surface No. | K | A | B | C | D | E |
|---|---|---|---|---|---|---|
| 1 | -314.7394 | 0.1909E-02 | -0.3767E-04 | 0.2250E-06 | 0.1759E-08 | 0.1516E-10 |
| 2 | 0.1175 | 0.1418E-03 | 0.2281E-02 | -0.6597E-03 | 0.7116E-04 | 0.7416E-06 |
| 3 | 0.2329 | -0.3562E-02 | 0.3331E-03 | -0.8273E-05 | -0.4124E-05 | 0.4902E-06 |
| 4 | -0.4775 | 0.1241E-01 | -0.1575E-02 | 0.2273E-03 | -0.1795E-04 | 0.7970E-06 |
| 5 | -4.7037 | -0.6149E-02 | 0.3278E-01 | -0.2294E-02 | 0.1478E-03 | 0.7817E-18 |
| 6 | 0.1622 | 0.1465E-01 | 0.1707E-01 | -0.8838E-02 | 0.4664E-02 | 0.4688E-15 |

Meanwhile, values of Conditional Equation for the first and second exemplary embodiments are represented by the following Table 5.

[Table 5]

| | First Exemplary Embodiment | Second Exemplary Embodiment |
|---|---|---|
| Conditional Equation (D2-R2) | 1.09 | 1.224 |

As set forth above, with the small-size and wide field-of-view optical system according to the present invention, three plastic lenses are used and the coating layer made of the organic material is formed on the entire surface of the front lens of the optical system, thereby making it possible to configure the optical system having the durability using only the plastic lenses as small as possible and maintain a resolution similar to an optical system configured of a glass lens. In addition, the wide field-of-view optical system according to the present invention may be miniaturized.

Although the exemplary embodiments of the present invention have been disclosed for illustrative purposes, those skilled in the art will appreciate that various modifications, additions and substitutions are possible, without departing from the scope and spirit of the invention as disclosed in the accompanying claims. Accordingly, such modifications, additions and substitutions should also be understood to fall within the scope of the present invention.

**Claims**

1.  A small-size and wide field-of-view optical system comprising:

    a first lens having negative refractive power, having a shape in which it is concave from the vicinity of a near axis to an object side and becomes convex outwardly, and including a coating layer formed on a surface thereof toward the object side;
    a second lens having positive refractive power and having a shape in which a surface thereof toward the object side is concave and an upper side thereof is convex; and
    a third lens having positive refractive power and having a shape in which both sides thereof are convex.

2.  The small-size and wide field-of-view optical system according to claim 1, further comprising an aperture stop installed between the second and third lenses, wherein the aperture stop blocks unnecessary light from light passing through the optical system.

3.  The small-size and wide field-of-view optical system according to claim 1, wherein it satisfies the following Conditional Equation with respect to aberration correction and MTF performance:

$$[\text{Conditional Equation}] \quad D2/R2 > 0.98$$

    where D2 indicates an interval between the first and second lenses and R2 indicates a radius of curvature of an upper side of the first lens.

4.  The small-size and wide field-of-view optical system according to claim 2, wherein it satisfies the following Conditional Equation with  respect to aberration correction and MTF performance:

$$[\text{Conditional Equation}] \quad D2/R2 > 0.98$$

    where D2 indicates an interval between the first and second lenses and R2 indicates a radius of curvature of an upper side of the first lens.

5.  The small-size and wide field-of-view optical system according to claim 1, wherein the coating layer is made of an organic material having a refractive index equal or similar to that of the first lens.

6.  The small-size and wide field-of-view optical system according to claim 5, wherein the coating layer is made of a thermally curable or ultraviolet (UV) curable acryl based resin.

7.  The small-size and wide field-of-view optical system according to claim 1, wherein the first to third lenses are formed as a plastic lens of which both surfaces are aspherical surfaces.

【FIG. 1】

【FIG. 2】

【FIG. 3A】

## ASTIGMATISM

IMG HT

2.40

1.80

1.20

0.60

-0.2    -0.1    0.0    0.1    0.2

FOCUS(mm)

【FIG. 3B】

## DISTORTION

IMG HT

2.40

1.80

1.20

0.60

-100.0   -50.0    0.0    50.0    100.0

% DISTORTION

9

【FIG. 4】

【FIG. 5】

【FIG. 6A】

## ASTIGMATISM

【FIG. 6B】

## DISTORTION

Europäisches
Patentamt

European
Patent Office

Office européen
des brevets

# EUROPEAN SEARCH REPORT

**Application Number**

EP 13 27 5069

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2009 230042 A (BROTHER IND LTD) 8 October 2009 (2009-10-08) * figure 5 * * paragraph [0026] * | 1-7 | INV. G02B9/12 G02B13/04 |
| Y | WO 2011/105067 A1 (PANASONIC CORP [JP]; KORENAGA TSUGUHIRO; ANDO TAKAMASA) 1 September 2011 (2011-09-01) * paragraph [0121] - paragraph [0122] * | 1-7 | |
| A | JP 2003 107344 A (MATSUSHITA ELECTRIC WORKS LTD) 9 April 2003 (2003-04-09) * figure 7 * | 1,7 | |
| A | JP 2007 025261 A (MATSUSHITA ELECTRIC WORKS LTD) 1 February 2007 (2007-02-01) * figure 1 * | 1,7 | |

TECHNICAL FIELDS
SEARCHED (IPC)

G02B

The present search report has been drawn up for all claims

| Place of search | Date of completion of the search | Examiner |
|---|---|---|
| Munich | 27 September 2013 | Linke, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 27 5069

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2013

| Patent document cited in search report | | Publication date | Patent family member(s) | | Publication date |
|---|---|---|---|---|---|
| JP 2009230042 | A | 08-10-2009 | NONE | | |
| WO 2011105067 | A1 | 01-09-2011 | CN | 102369463 A | 07-03-2012 |
| | | | JP | 4815029 B2 | 16-11-2011 |
| | | | US | 2012008210 A1 | 12-01-2012 |
| | | | WO | 2011105067 A1 | 01-09-2011 |
| JP 2003107344 | A | 09-04-2003 | JP | 4123771 B2 | 23-07-2008 |
| | | | JP | 2003107344 A | 09-04-2003 |
| JP 2007025261 | A | 01-02-2007 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120075603

- JP 2006133270 A